# EUROPEAN PATENT APPLICATION

(11) **EP 4 813 623 A1**
(43) Date of publication of application: **30.09.2026**
(21) Application number: 26161839.1
(22) Date of filing: 03.03.2026
(51) Int. Cl.: B32B 3/10, B32B 5/20, E04B 1/80

(54) **ROLL OF INSULATION FOAM AND METHOD FOR MAKING SUCH ROLL**

(30) Priority: 28.03.2025 EP 25167132
(71) Applicant: Unilin, BV, 8710 Wielsbeke (BE)
(72) Inventor: El Fgaier, Fayçal, 8710 Wielsbeke (BE)
(74) Representative: Unilin Technologies

(57) **Abstract**

A rigid insulation foam product is provided in folded or in rolled form. The rigid insulation foam product comprises a plurality of parallel segments of rigid polymer foam. Each of the segments comprises when the folded or rolled rigid foam product is unfolded or unrolled to a flat rigid insulation foam product, a top surface, a bottom surface and two side surfaces; wherein the top surface is opposite to the bottom surface. Each of the segments comprises at its top surface a first facing and its bottom surface a second facing. The rigid polymer foam has been foamed onto the first facing and onto the second facing. The plurality of parallel segments comprises a first segment and a second segment. The first segment is adjacent to the second segment. The second facing of the first segment continues into the second facing of the second segment. The side surfaces of the first segment and of the second segment facing each other in unrolled or unfolded condition have been established by cutting into the rigid polymer foam except for a section of at most 5 mm above the second facing. The side surfaces of the first segment and of the second segment facing each other in said section have been established by breaking by a bending movement of the rigid polymer foam.

## Description

The invention relates to a roll of rigid insulation foam and to a method for making such roll.

EP1990476A1 discloses an insulating tape. The insulation tape comprises a backing layer and segments of an insulating layer from hard insulating material, e.g. of rigid polyurethane foam. The segments of the insulating layer are subsequently adhered to the backing layer. The insulating tape is rolled up to a roll. Adjacent segments of the insulating layer lie closely together at the backing layer and run away in the direction at its upper end, so that it creates a wedge-shaped gap extending itself in the direction of the upper end. The backing layer comprises a non-woven, a flexible material or a flexible film.

DE8119141UA relates to a roll of composite insulating panel comprising insulating material and a backing layer. The composite insulating panel comprises transverse incisions in the insulating material. At least one incision cuts through the insulating material up to the backing layer. No disclosure is made on how the incisions are made.

It is an object of the invention to provide an improved roll of rigid thermal insulation foam. It is an object of the invention to provide a roll of rigid thermal insulation foam that has improved thermal insulation properties when unrolled.

The first aspect of the invention is a rigid insulation foam product in folded or in rolled form. The rigid insulation foam product comprises a plurality of parallel segments of rigid polymer foam. Each of the segments comprises when the folded or rolled rigid foam product is unfolded or unrolled to a flat rigid insulation foam product, a top surface, a bottom surface and two side surfaces; wherein the top surface is opposite to the bottom surface. Each of the segments comprises at its top surface a first facing. Each of the segments comprises at its bottom surface a second facing. The rigid polymer foam has been foamed onto the first facing and onto the second facing. The plurality of parallel segments comprises a first segment and a second segment. The first segment is adjacent to the second segment. The second facing of the first segment continues into the second facing of the second segment. The side surfaces of the first segment and of the second segment facing each other in unrolled or unfolded condition have been established by cutting into the rigid polymer foam except for a section of at most 5 mm - and preferably at most 3 mm; and preferably more than 1 mm, more preferably more than 2 mm - above the second facing. The side surfaces of the first segment and of the second segment facing each other in said section have been established by breaking by a bending movement of the rigid polymer foam.

The top surface and the bottom surface are defined in unfolded or unrolled condition of the rigid insulation foam product when the second facings of the plurality of parallel segments lie flat on an underground.

It is a benefit of the invention that a the rigid insulation foam product is provided that can be installed easily and fast with minimal cold bridges. The rigid insulation foam product of the invention can e.g. be used for floor insulation (with or without floor heating system ), for insulation of flat roofs which might be inclined or substantially flat, for wall insulation or for the insulation of pitched roofs.

The rigid insulation foam product of the invention also has the benefit that in production less waste is created compared to a same combined surface of rigid insulation foam panels having coupling parts - such as e.g. tongue and groove - at their edges. Production of the coupling parts on panels reduces the useful area of the rigid insulation foam panels. This is not the case with the rigid insulation foam product in folded or in rolled form of the invention.

The continuous facing with its excellent adhesion to the rigid foam product thanks to the rigid foam having been foamed onto the facings, provides improved dimensional stability to the rigid insulation foam product. The dimensional stability of the rigid foam product is important, e.g. when used for insulating a roof.

With "foamed onto the facings" is meant that the adhesion between the rigid insulation foam and the facings is obtained in the foaming process itself. EP1790452A2 discloses an example of such a production process.

The rigid insulation foam according to the invention can also be used for thermally insulating a wall.

Preferably, the rigid polymer foam has been foamed onto the first facing and onto the second facing, is meant that the first facing and the second facing adhere to the rigid polymer foam through the process of manufacturing the rigid polymer foam wherein the foaming process occurs at least in part by the foam between the first facing and the second facing, as is known in the process for making rigid isocyanurate foam panels or rigid polyurethane foam panels between a first facing and a second facing. The first facing and the second facing can be helpful to create gas tightness of the rigid foam insulation panel, thereby improving the long term thermal insulation properties of the product.

The first facings of the first segment and of the second segment preferably have been separated from each other by a cut.

A preferred rigid insulation foam product is characterized in that the facing side surfaces of the first segment and of the second segment contact each other - and preferably over substantially their full surface area - when the folded or rolled rigid foam product is unfolded or unrolled to a flat rigid insulation foam product wherein the second facing of the first segment and of the second segment are lying flat on a flat surface.

Such embodiments have the benefit that an excellent thermal is obtained when unrolling or unfolding the rigid insulation foam product, as cold bridges between the segments are effectively prevented.

A preferred rigid insulation foam product is characterized in that the plurality of parallel segments comprises or consists of a series of first segments and second segments, wherein a second segment is adjacent to a first segment. The second segment in a combination of first segment and second segment can be a first segment in the subsequent combination of first segment and second segment.

This way, a nice folded or rolled rigid foam product can be provided for easy and fast installation, resulting in a thermal insulation with excellent thermal insulation properties.

A preferred embodiment is characterized in that the rigid insulation foam product comprises a continuous facing provided at least by the second facings of each of the plurality of parallel segments.

Such rigid insulation foam product can be installed easily and fast, and results in a rigid insulation foam product having excellent dimensional stability.

A preferred rigid insulation foam product characterized in that the side surfaces of the first segment and of the second segment facing each other in unrolled or unfolded condition of the rigid insulation foam product are in unrolled or unfolded condition of the rigid insulation foam product perpendicular to the second facing.

Such embodiments have the benefit that damage in transport to the edges is minimized, synergistically contributing to excellent thermal insulation properties of the rigid insulation foam product after its installation.

A preferred rigid insulation foam product is characterized in that the side surfaces of the first segment and of the second segment facing each other in unrolled or unfolded condition of the rigid insulation foam product are in unrolled or unfolded condition of the rigid insulation foam product inclined with respect to the direction perpendicular to the second facing, preferably wherein the inclination angle is between 30 and 60.

Such embodiments have the benefit that in installed insulation foam products according to the invention cold bridges between the first segment and the second segment are even better prevented, as the "cut" separating the first segment from the second segment is inclined.

A preferred rigid insulation foam product is characterized in that the plurality of segments comprise a third segment. The third segment is adjacent to the second segment. The first facing of the second segment continues into the first facing of the third segment. The side surfaces of the third segment and of the adjacent second segment facing each other in unfolded or unrolled condition have been established by cutting into the rigid insulation foam except for a section of at most 5 mm - and preferably at most 3 mm; and preferably more than 1 mm, more preferably more than 2 mm - above the first facing; The side surfaces facing each other of the third segment and its adjacent second segment of the section have been established by breaking by a bending movement of the rigid polymer foam.

Such embodiment can result in a rigid insulation foam product which is at least in part folded or rolled in a zig-zag way. Such arrangement results in a minimal volume of the rigid insulation foam product of the invention.

The second facings of the second segment and of the third segment have preferably been separated from each other by a cut.

The facing side surfaces of the second segment and of the adjacent third segment preferably contact each other -preferably over substantially their full surface area - when the folded or rolled rigid foam product is unfolded or unrolled to a flat rigid insulation foam product wherein the second facing of the second segment and of the third segment are lying on a flat surface.

It is a benefit that this way excellent thermal insulation values can be obtained.

A preferred rigid insulation foam product is characterized in that the side surfaces of the second segment and of the third segment facing each other in unrolled or unfolded condition of the rigid insulation foam product are in unrolled or unfolded condition of the rigid insulation foam product perpendicular to the first facing.

Such embodiments have the benefit that damage in transport to the edges is minimized, synergistically contributing to excellent thermal insulation properties of the rigid insulation foam product after its installation.

A preferred rigid insulation foam product is characterized in that the side surfaces of the second segment and of the third segment facing each other in unrolled or unfolded condition of the rigid insulation foam product are in unrolled or unfolded condition of the rigid insulation foam product inclined with respect to the direction perpendicular to the first facing, preferably wherein the inclination angle is between 30 and 60.

Such embodiments have the benefit that in installed insulation foam products according to the invention cold bridges between the first segment and the second segment are even better prevented, as the "cut" separating the second segment from the third segment is inclined.

A preferred rigid insulation foam product comprises a plurality of second segments and third segments, wherein a second segment is adjacent to a third segment.

The first facing and the second facing can have the same composition or a different composition. However, additional layers can be laminated at the bottom of the second facing, even if the first facing and the second facing have the same composition. The bottom of the second facing is the side opposite to the side of the second facing onto which the rigid foam has been foamed.

The first facing and/or the second facing can comprise an aluminum foil.

The first facing and/or the second facing preferably is a laminate comprises one or more of at least an aluminum foil, at least one paper sheet (preferably a Kraft paper sheet) and at least one polymer film.

The first facing and/or the second facing can be a laminate of at least 200 micrometer thick, preferably of less than 500 micrometer thick.

The first facing and/or the second facing may consist of an aluminum foil, preferably of a coated aluminum foil. The aluminum foil providing the first facing and/or the second facing can comprise a protective coating at the side opposite to the side onto which the foaming has occurred. The aluminum foil providing the first facing and/or the second facing can comprise a coating at the side onto which the foaming has occurred from improving the adhesion of the rigid foam in the foaming process; this coating can be a polyurethane coating.

A preferred rigid insulation foam product is characterized in that one or more than one additional layer(s) is/are laminated at the bottom of the second facing.

Additional layers can be laminated at the bottom of the second facing, meaning the side opposite to the side onto which the foaming has taken place. Additional layers can be selected from a woven or nonwoven glass fabric; a nonwoven polymer fiber fabric (e.g. a nonwoven polyester fabric); a composite material; a multilayer material; a layer comprising hooks or loops for a hook-and-loop fixation system; or a pressure sensitive adhesive layer, optionally with a release liner.

Such embodiments provide additional properties to the rigid insulation foam product once unrolled or unfolded and installed.

It is a benefit that the additional layer can be continuous over the full length of the rigid insulation foam product. This is not the case when forming an insulation with insulation panels of smaller dimensions which need to be coupled by coupling parts, such as a tongue and groove connection.

A preferred rigid insulation foam product is characterized in that the side surfaces of the first segment(s), the second segment(s) and the optional third segment(s) are substantially flat at least to a distance of at most 5 mm - and preferably of at most 3 mm; and preferably of more than 1 mm, more preferably of more than 2 mm - from the facing - being the second facing or the first facing - continuing between adjacent segments.

Such embodiments are favored as they ensure excellent insulation properties of the rigid insulation foam product, and ensure that the rigid insulation foam product can be easily manufactured.

A preferred rigid insulation foam product is characterized in that the combined thickness of the first facing, the rigid polymer foam, and the second facing is more than 20 mm, preferably more than 35 mm, preferably more than 65 mm, and preferably less than 300 mm, more preferably less than 150 mm.

The rigid polymer foam is preferably selected from rigid isocyanurate foam, rigid polyurethane foam or rigid phenolic foam.

The rigid polymer foam preferably is a closed cell rigid foam.

The closed cells preferably comprise at least a blowing agent. The blowing agent can be selected from carbon dioxide, pentane, or combinations thereof. The blowing agent preferably is a combination of carbon dioxide with an auxiliary blowing agent, which can e.g. comprise or be pentane.

Pentane is cheap and an excellent blowing agent. However, because it is flammable, it could limit the cutting methods that can be used to produce that rigid insulation foam product of the invention. Laser cutting e.g. could create a hazard.

A preferred rigid insulation foam product is characterized in that the angle between the second facings at the bottom of at least one first segment and its adjacent second segment is 90°.

A preferred rigid insulation foam product is characterized in that it comprises a plurality of first segments wherein the angle between the second facings of the first segment and its adjacent second segment is 90°.

Such embodiment provide a very compact arrangement of the segments, resulting in a small volume of the rigid insulation foam product which can be easily unrolled and installed.

A preferred rigid insulation foam product is characterized in that the angle between the second facings at the bottom of at least one first segment and its adjacent second segment is at least 120°.

A preferred rigid insulation foam product is characterized in that it comprises a plurality of first segments wherein the angle between the second facings of the first segment and its adjacent second segment is at least 120°.

Rigid insulation foam products according to this embodiment can be very easily unrolled, facilitating the installation even more.

A preferred rigid insulation foam product is characterized in that the insulation product comprises a first segment, a second segment adjacent to the first segment, and a third segment adjacent to the second segment; wherein the angle between the second facings of the first segment and the second segment is 0°; and wherein the angle between the first facings of the second segment and the third segment is 0°.

Such embodiments result in a very compact folding of the rigid insulation foam product, resulting in minimal space taken, which facilitates its transport.

Such embodiment allows to have a zig-zag folded rigid insulation foam product.

Cutting rather than sawing can be used for establishing the plurality of segments from a rigid foam insulation board. Sawing has the disadvantage that material is removed because of the thickness of the saw.

A preferred rigid insulation foam product is characterized in that the side walls of the first segment(s), of the second segment(s) and of the optional third segment(s) are established by ultrasonic cutting of the rigid polymer foam through the first facing into the rigid polymer foam.

By ultrasonic cutting through the rigid insulation foam, the segments are separated from each other, without material being removed in the cut.

The use of ultrasonic cutting has shown to result in a nice cut, with facing side surfaces - in unrolled or unfolded condition of the rigid insulation foam product - that nicely touch each other, such that the thermal insulation efficiency is high.

The high frequency of cutting combined with its small amplitude of cutting in each cycle seems to result in the neat cutting, without removing material, without permanent deformation of the cut surfaces, such that the cut surfaces - the facing surfaces in unrolled or unfolded condition of the adjacent segments - nicely touch each other in unrolled or unfolded condition of the rigid insulation foam product. The inventors suspect that the high speed of cutting in ultrasonic cutting results in the excellent cut thanks to the strain rate sensitivity of the rigid foam when cutting it with an ultrasonic knife.

Standard knives need more force to cut, are therefore more difficult to guide; and require a thicker blade for cutting the rigid insulation foam. A thick knife can result in damaging of the cut walls by permanent deformations, resulting in less good or even no touching surfaces of adjacent segments in unrolled or unfolded condition of the rigid insulation foam product.

A preferred rigid insulation foam product is characterized in that it has in unrolled or unfolded condition a length of at least 5 meter. The length is determined perpendicular to the facing side surfaces of the segments.

A preferred rigid insulation foam product is characterized in that it is at least 1 meter wide, and more preferably at least 1.1 meter wide. The width is measured in the direction parallel with the facing side surfaces of the segments.

A preferred rigid insulation foam product is characterized in that the first segment(s), the second segment(s) and the optional third segment(s) comprise a first end face and a second end face. Preferably, the first end face and the second end face are provided in the length direction of the rigid insulation foam product when unrolled or unfolded. The first end faces comprise a first coupling part and the second end faces comprise a corresponding second coupling part.

A plurality of such rigid insulation foam products can be more easily coupled to each other for insulating a large surface, e.g. an inclined roof.

The coupling parts can e.g. comprise an L-shape and a corresponding inverted L-shape. The coupling parts can e.g. comprise a tongue and a corresponding groove.

The first end face and the second end face are preferably perpendicular to the facing side surfaces of the first segment(s), the second segment(s) and the optional third segment(s).

The second aspect of the invention is a rigid insulation foam product as in any embodiment of the first aspect of the invention, unfolded or unrolled to a flat rigid insulation foam product, wherein the second facing of each of the segments is provided in the same plane.

The third aspect of the invention is a method for producing a rigid insulation foam product as in any embodiment of the first aspect of the invention The method comprises the steps of
a) providing a board comprising rigid polymer foam between a continuous first facing and a continuous second facing, wherein the rigid polymer foam has been foamed onto the first facing as well as on the second facing;
b) providing a knife;
c) cutting with the knife through the first facing, and into the rigid polymer foam up to a distance of at most 5 mm - and preferably at most 3 mm; and preferably more than 1 mm, more preferably more than 2 mm - above the second facing; and breaking by bending the remaining not cut distance of the rigid polymer foam;
wherein in step c) the first segment and the second segment are created.

The rigid polymer foam is preferably selected from rigid isocyanurate foam, rigid polyurethane foam and phenolic foam.

Step c) is preferably repeated such that a plurality of first segments and each time an adjacent second segment is created.

The method preferably comprises a step d), wherein step d) comprises providing a knife and cutting with the knife through the second facing, and into the rigid polymer foam up to a distance of at most 5 mm - and preferably at most 3 mm; and preferably more than 1 mm, more preferably more than 2 mm - above the first facing, and breaking by bending the remaining not cut distance of the polymer foam, wherein in step d) a third segment and an adjacent second segment are created..

Step d) is preferably repeated such that a plurality of third segments and with each time an adjacent second segment is created.

The method preferably comprises the step of rolling or folding the rigid insulation foam product.

A preferred method is characterized in that the knife provided in step b) - and preferably in the optional step d) - is an ultrasonic knife; and that the cutting is ultrasonic cutting.

By ultrasonic cutting through the rigid insulation foam, the segments are separated from each other, without material being removed in the cut.

The use of ultrasonic cutting has shown to result in a nice cut, with facing side surfaces - in unrolled or unfolded condition of the rigid insulation foam product - that nicely touch each other, such that the thermal insulation efficiency is high.

The high frequency of cutting combined with its small amplitude of cutting in each cycle seems to result in the neat cutting, without removing material, without permanent deformation of the cut surfaces, such that the cut surfaces - the facing surfaces in unrolled or unfolded condition of the adjacent segments - nicely touch each other in unrolled or unfolded condition of the rigid insulation foam product. The inventors suspect that the high speed of cutting in ultrasonic cutting results in the excellent cut thanks to the strain rate sensitivity of the rigid foam when cutting it with an ultrasonic knife.

Standard knives need more force to cut, are therefore more difficult to guide; and require a thicker blade for cutting the rigid insulation foam. A thick knife can result in damaging of the cut walls by permanent deformations, resulting in less good or even no touching surfaces of adjacent segments in unrolled or unfolded condition of the rigid insulation foam product.

The ultrasonic cutting is preferably performed at a frequency of at least 20 kHz.

The ultrasonic cutting is preferably performed at a speed higher than 200 mm/s, and preferably at a speed lower than 800 mm/s.

The ultrasonic knife is preferably less than 2.5 mm thick, and more preferably less than 2 mm thick, even more preferably less than 1.6 mm thick.

Such embodiments provide insulation foam products that show better insulation properties once unrolled or unfolded and installed.

A preferred method is characterized in that in the cutting operation the ultrasonic cutting knife cuts while making an angle between 20° and 70° with the direction perpendicular to the first facing at the location the cutting is performed. More preferably, in the cutting operation the ultrasonic cutting knife cuts while making an angle between 30° and 60° with the direction perpendicular to the first facing at the location the cutting is performed

It is a benefit of such embodiment that a better cutting quality is obtained, synergistically contributing to the excellent insulation properties of the rigid insulation foam product once unrolled or unfolded and installed.

A preferred method is characterized in that in the cutting operation the ultrasonic cutting knife cuts while being in a plane perpendicular to the first facing at the location the cutting is performed.

A preferred method is characterized in that the knife is a punching knife; and in that the cutting with the punching knife is a punching operation.

Such embodiments are beneficial as the cutting process can be very well controlled, such that a nice cut is obtained, resulting in a rigid insulation foam product with high thermal insulation properties.

The punching knife is preferably less than 2 mm thick.

With the intention of better showing the characteristics of the invention, hereafter, as an example without any limitative character, preferred embodiments are described, with reference to the accompanying drawings, wherein:
figure 1 shows a board that can be used in the invention;
figure 2 shows a cross section according to II - II of the board of figure 1;
figure 3 illustrates a method according to the invention;
figures 4a) and b) illustrate examples of the cut made in the board;
figures 5 and 6 illustrate rigid insulation foam products according to the invention after having been unfolded;
figures 7 and 8 show rigid insulation foam products in folded form according to the invention;
figure 9 illustrates a method according to the invention;
figures 10 and 11 shows examples of thermal insulation made with rigid insulation foam products according to the invention; and
figure 12 shows a rigid foam product in rolled form according to the invention.

The reference numerals have the same meaning in the different figures.

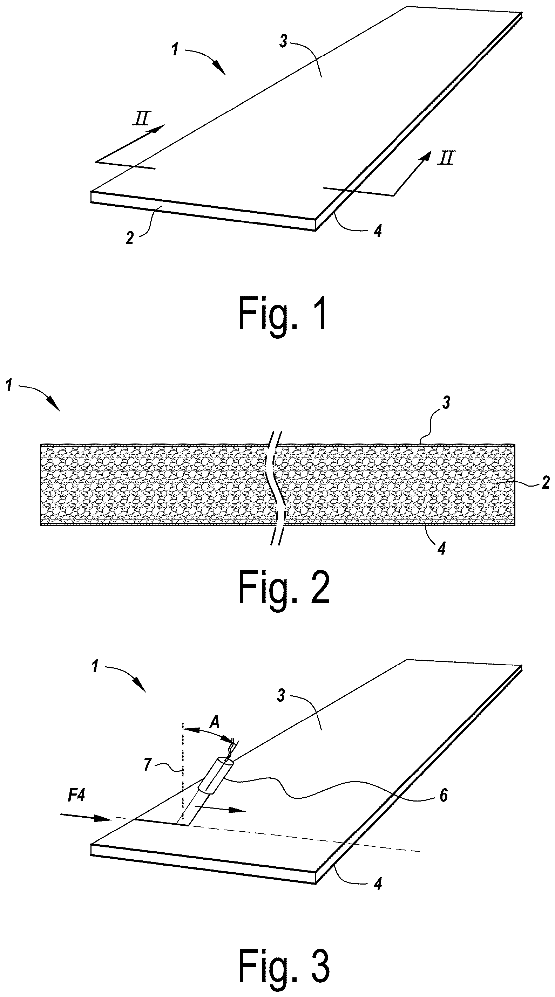

Figure 1 shows an example of a board 1 that can be used to produce a rigid insulation product in folded or in rolled form according to the invention. Figure 2 shows a cross section according to II - II of the board of figure 1.

The board 1 comprises a rigid polymer foam 2 between a first facing 3 at the top surface of the board 1 and a second facing 4 at the bottom surface of the board 1. The rigid polymer foam 1 of the board example of figure 1 is a closed cell rigid isocyanurate foam or a closed cell rigid polyurethane foam. The isocyanurate or the polyurethane has been foamed on to the first facing 3 and onto the second facing 4.

Figure 3 illustrates a method according to the invention for producing a rigid insulation foam product in folded or in rolled form according to the invention.

A board 1 is provided comprising rigid polymer foam 2 between a continuous first facing 2 and a continuous second facing 3. The rigid polymer foam 2 - e.g. rigid isocyanurate foam or rigid polyurethane foam - has been foamed onto the first facing 3 as well as on the second facing 4. The board 1 can be a board 1 as shown in figures 1 and 2.

An ultrasonic knife 6 is provided. The ultrasonic knife 6 is lead in the direction F4 and cuts ultrasonically through the first facing 3, and into the rigid polymer foam 2 up to a distance D of at most 5 mm - and preferably at most 3 mm - above the second facing 3. The remaining not cut distance of the rigid polymer foam is broken by bending.

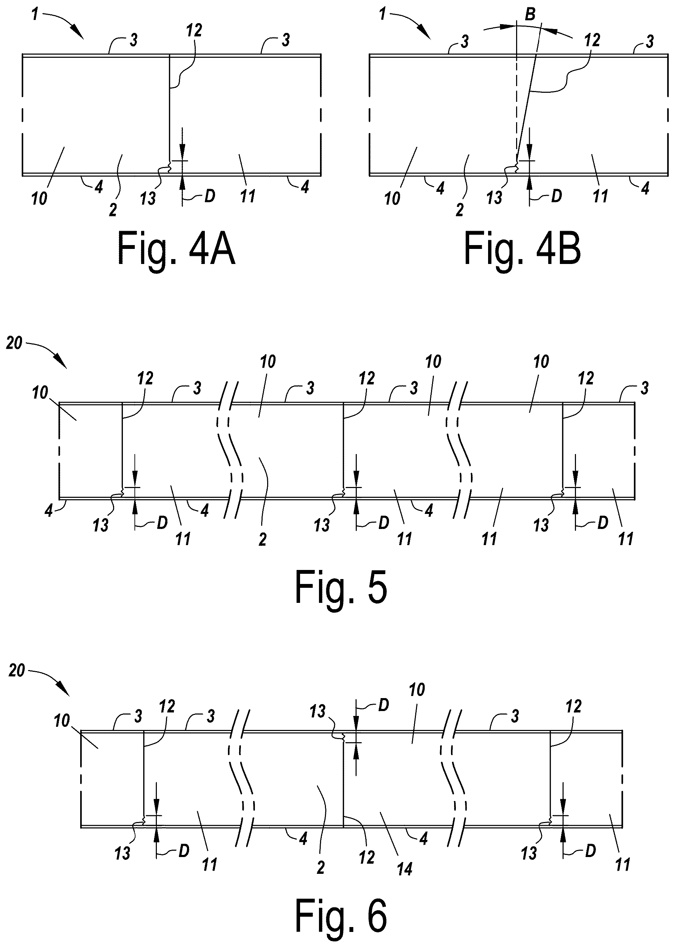

This way, after folding back, the product of figure 4a) is made.

In the method shown in figure 3, the ultrasonic knife 6 cuts while making an angle A of 30° with the direction 7 perpendicular to the first facing 3 at the location the cutting is performed.

Figure 4a) shows an example of the cut made in the board 1. Figure 4a) shows the board after cutting and after breaking the not cut distance by a bending operation. In the cutting operation, a first segment 10 and a second segment 11 is created in the board. The first segment 10 is parallel with the second segment 11. Contrary to the first facing 3, the second facing 4 has not been cut nor broken and the second facing 4 of the first segment 10 continues into the second facing 4 of the second segment 11.

The side surfaces of the of the first segment 10 and of the second segment 11 facing each other in unrolled or unfolded condition (as shown in figure 4a)) have been established by a cut 12 except for a section 13 of at most 5 mm - and preferably at most 3 mm - above the second facing 4. In this section 13, the side surfaces facing each other of the first segment 10 and the second segment facing it have been established by breaking by a bending movement of the rigid polymer foam 2. Therefore, the side surfaces in this section 13 can have a frayed appearance.

Figure 4b) shows an alternative example in the same view as figure 4a). The reference numerals have the same meaning as in figure 4a). The difference between the configuration in figures 4a) and 4b) is that in the cutting arrangement for producing the rigid insulation foam product of figure 4b), the ultrasonic cutting knife cuts while being directed through the board in a plane making an angle B with the plane perpendicular to the first facing 3 at the location the cutting is performed. The angle B is the angle between the cut 12 and the plane perpendicular to the board 1.

Figures 5 and 6 illustrate rigid insulation foam products 20 according to the invention after having been unfolded.

Figure 5 shows an arrangement of a rigid insulation foam product 20 according to the invention after having been unfolded wherein all cuts 12 have been made from the same side of the board 1. This way, each cut 12 separates a first segment 10 from a second segment 11. The second segment 11 is in itself also a first segment 10 in the subsequent combination of first segment 10 and second segment 11. The cuts 12 are made through the first facing 3 and into the rigid polymer foam except for a section 13 of at most 5 mm - and preferably at most 3 mm - above the second facing 4. In the sections 13 of at most 5 mm - and preferably at most 3 mm - above the second facing 4, the rigid polymer foam has been broken by a bending operation. Therefore, the facing side surfaces of the segments 10, 11 in this section 13 can have a frayed appearance. The second facing 4 is continuous over the full bottom surface of the rigid insulation foam product 20. It means that is has not been cut nor broken when creating the segments 10, 11.

Figure 6 shows an arrangement of a rigid insulation foam product 20 according to the invention after having been unfolded wherein cuts 12 have been made alternatingly from both sides of the board 1. The rigid insulation foam product 20 comprises a plurality of parallel segments 10, 11, 14. The plurality of parallel segments comprises first segments 10 and second segments 11. Each second segment 11 is adjacent to a first segment 10. The second facing 4 of the first segment 10 continues into the second facing 4 of the adjacent second segment 11. It means that the second facing 4 has not been cut between the first segment 10 and its adjacent second segment 11. The side surfaces of the first segment 10 and of the second segment 11 facing each other in unrolled or unfolded condition have been established by making a cut 12 into the rigid polymer foam 2 except for a section 13 having a distance D of at most 5 mm - and preferably at most 3 mm - above the second facing 4. The side surfaces facing each other of adjacent segments in this section 13 have been established by breaking by a bending movement of the rigid polymer foam 2

The plurality of segments comprise third segments 14. A third segment 14 is adjacent to a second segment 11. The first facing 3 continues from the second segment 11 into its adjacent third segment 14. The side surfaces of the second segment 11 and of the adjacent third segment 14 facing each other in unfolded or unrolled condition have been established by cutting - thereby providing a cut 12 - through the second facing 4 into the rigid insulation foam except for a section 13 at a distance D of at most 5 mm - and preferably at most 3 mm; and preferably more than 1 mm, more preferably more than 2 mm - from the first facing 3. The side surfaces of the second segment 11 and of the adjacent third segment 14 facing each other in unfolded or unrolled condition of this section 13 have been established by breaking by a bending movement of the rigid polymer foam core.

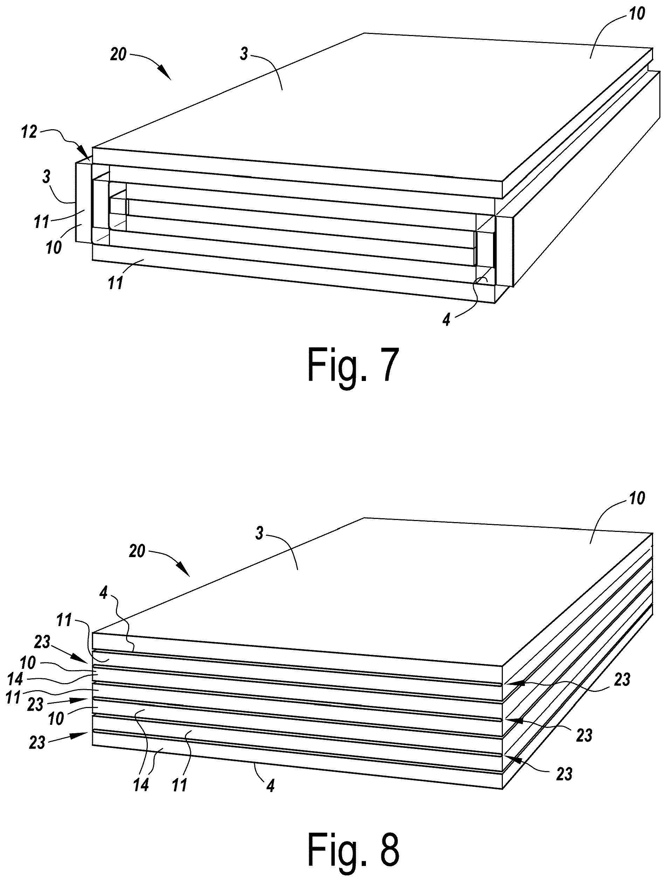

Figure 7 shows an example of a rigid insulation foam product 20 in folded form according to the invention. The insulation foam product 20 comprises a plurality of parallel segments 10, 11 of rigid polymer foam. The rigid polymer foam has been foamed onto a first facing 3 and a second facing 4. The second facing 4 is continuous over the rigid insulation foam product 20; whereas the first facing 3 is cut between the segments 10, 11. The rigid insulation foam product 20 comprises first segments 10 and second segments 11. A first segment 10 has an adjacent second segment 11. A second segment 11 is a first segment 10 in a next combination of a first segment 10 and a second segment 11. Cuts 12 have been made from the same side of the board 1. This way, each cut 12 separates a first segment 10 from a second segment 11. The cuts 12 are made through the first facing 3 and into the rigid polymer foam except for a section of at most 5 mm - and preferably at most 3 mm - above the second facing 4. In the sections of at most 5 mm - and preferably at most 3 mm - above the second facing 4, the rigid polymer foam has been broken by a bending operation. Therefore, the facing side surfaces of the segments 11, 12 in this section 13 can have a frayed appearance.

The rigid insulation foam product 20 of figure 7 can be easily unfolded or unrolled to provide a thermal insulation, e.g. a floor insulation.

Figure 8 shows an example of a rigid insulation foam product 20 in folded form according to the invention. The rigid insulation foam product 20 of figure 8 comprises alternating first segments 10, second segments 11 and third segments 14. A first segment 10 is followed by a second segment 12, which is followed by a third segment 14. A third segment 14 is a first segment 10 adjacent to a next second segment 11. The rigid insulation foam product has a first facing 3 and a second facing 4. At positions 23 a facing - the first facer 3 or the second facer 4 - is continuous between the adjacent segments. Between each first segment 10 and its adjacent second segment 11, the second facing 4 is continuous. In the example shown, the second facings 4 of the first segment 10 and adjacent second segment 11 have an included angle of 0°. Between each second segment 11 and its adjacent third segment 14, the first facing 3 is continuous. In the example shown, the first facings 3 of the second segment 11 and its adjacent third segment 14 the included angle is 0°.

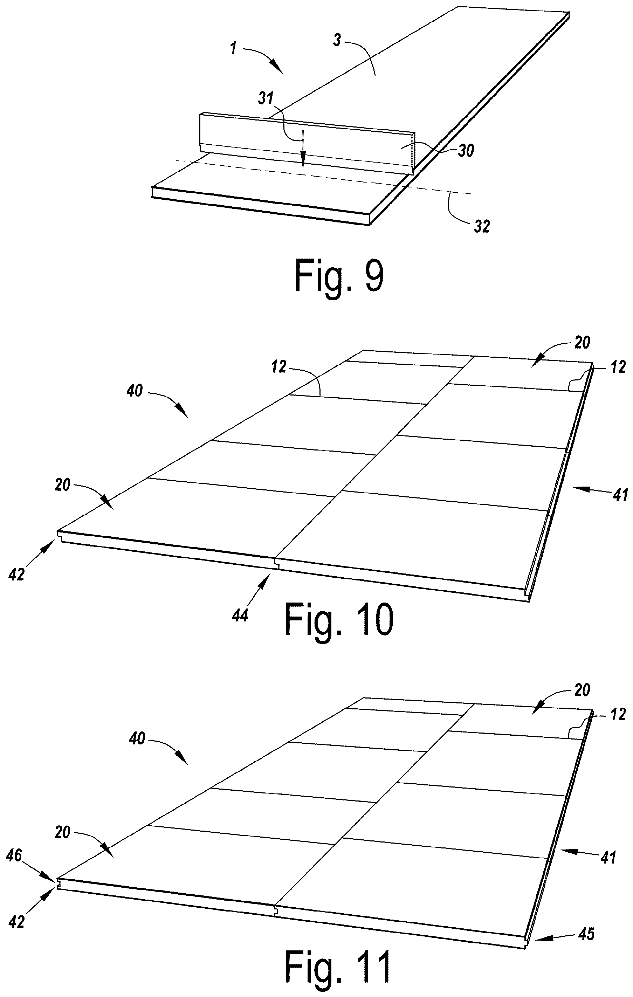

Figure 9 illustrates a method according to the invention in which a punching knife 30 is used instead of the ultrasonic knife 7 of the method shown in figure 3. The punching knife 30 moves down perpendicularly to the board 1 in the direction indicated by arrow 31 and cuts at the dashed line 32 through the first facing 3 and into the rigid polymer foam up to a distance of less than 5 mm - and preferably less than 3 mm - from the second facing 4. After which the remaining section of the rigid polymer foam is broken by means of a bending movement.

The configuration of the rigid insulation foam product 20 of figure 8 makes is easy to install by unfolding it.

Figures 10 and 11 show examples of thermal insulation 40 made with rigid insulation foam products 20 according to the invention, e.g. from unrolling rigid insulation foam products 20 as shown in figure 7. The opposite edges 40, 41 of the rigid insulation foam products 20 perpendicular to the cuts 12 comprise corresponding coupling parts for coupling adjacent rigid insulation foam products 20 in a thermal insulation 40.

The corresponding coupling parts are in the example of figure 10 configured for providing an overlapping joint 44. The corresponding coupling parts in the example of figure 11 are configured as a tongue 45 and a corresponding groove 46.

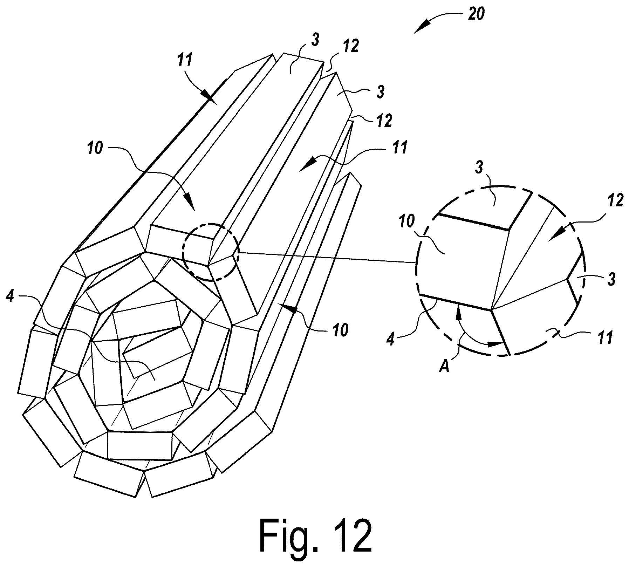

Figure 12 shows an example of a rigid foam product 20 in rolled form according to the invention. The insulation foam product 20 comprises a plurality of parallel segments 10, 11 of rigid polymer foam. The rigid polymer foam has been foamed onto a first facing 3 and a second facing 4. The second facing 4 is continuous over the rigid insulation foam product 20; whereas the first facing 3 is cut between the segments 10, 11. The rigid insulation foam product 20 comprises first segments 10 and second segments 11. A first segment 10 has an adjacent second segment 11. A second segment 11 is a first segment 10 in a next combination of a first segment 10 and a second segment 11. Cuts 12 have been made from the same side of the board 1. This way, each cut 12 separates a first segment 10 from a second segment 11. The cuts 12 are made through the first facing 3 and into the rigid polymer foam except for a section of at most 5 mm - and preferably at most 3 mm - above the second facing 4. In the sections of at most 5 mm - and preferably at most 3 mm - above the second facing 4, the rigid polymer foam has been broken by a bending operation. Therefore, the facing side surfaces of the segments 10, 11 can have a frayed appearance. The angle A between the second facings 4 at the bottom of at least one first segment 10 and its adjacent second segment 11 is at least 120° for most of the adjacent segments.

The rigid insulation foam product 20 of figure 7 can be easily unrolled to provide a thermal insulation, e.g. a floor insulation.

The invention also relates to the following list of numbered items:
Item 1.- Rigid insulation foam product in folded or in rolled form, wherein the rigid insulation foam product comprises a plurality of parallel segments of rigid polymer foam;
   wherein each of the segments comprises when the folded or rolled rigid foam product is unfolded or unrolled to a flat rigid insulation foam product, a top surface, a bottom surface and two side surfaces; wherein the top surface is opposite to the bottom surface; wherein each of the segments comprises at its top surface a first facing;
   wherein each of the segments comprises at its bottom surface a second facing;
   wherein the rigid polymer foam has been foamed onto the first facing and onto the second facing;
   wherein the plurality of parallel segments comprises a first segment and a second segment, wherein the first segment is adjacent to the second segment; wherein the second facing of the first segment continues into the second facing of the second segment;
   wherein the side surfaces of the first segment and of the second segment facing each other in unrolled or unfolded condition have been established by cutting into the rigid polymer foam except for a section of at most 5 mm - and preferably at most 3 mm - above the second facing; and wherein the side surfaces of the first segment and of the second segment facing each other in said section have been established by breaking by a bending movement of the rigid polymer foam.
Item 2.- Rigid insulation foam product as in item 1, characterized in that the first facings of the first segment and of the second segment have been separated from each other by a cut.
Item 3.- Rigid insulation foam product as in any of the preceding items, characterized in that the facing side surfaces of the first segment and of the second segment contact each other - and preferably over substantially their full surface area - when the folded or rolled rigid foam product is unfolded or unrolled to a flat rigid insulation foam product wherein the second facing of the first segment and of the second segment are lying flat on a flat surface.
Item 4.- Rigid insulation foam product as in any of the preceding items, characterized in that the plurality of parallel segments comprises or consists of a series of first segments and second segments, wherein a second segment is adjacent to a first segment.
Item 5.- Rigid insulation foam product as in any of the preceding items, characterized in that the rigid insulation foam product comprises a continuous facing provided at least by the second facings of each of the plurality of parallel segments.
Item 6.- Rigid insulation foam product as in any of the preceding items 1 - 5, characterized in that the side surfaces of the first segment and of the second segment facing each other in unrolled or unfolded condition of the rigid insulation foam product are in unrolled or unfolded condition of the rigid insulation foam product perpendicular to the second facing.
Item 7.- Rigid insulation foam product as in any of the preceding items 1 - 5, characterized in that the side surfaces of the first segment and of the second segment facing each other in unrolled or unfolded condition of the rigid insulation foam product are in unrolled or unfolded condition of the rigid insulation foam product inclined with respect to the direction perpendicular to the second facing, preferably wherein the inclination angle is between 30 and 60°.
Item 8.- Rigid insulation foam product as in any of the preceding items 1 - 7, characterized in that the plurality of segments comprise a third segment;
   wherein the third segment is adjacent to the second segment;
   wherein the first facing of the second segment continues into the first facing of the third segment; wherein, the side surfaces of the third segment and of the adjacent second segment facing each other in unfolded or unrolled condition have been established by cutting into rigid insulation foam except for a section of at most 5 mm - and preferably at most 3 mm - above the first facing; and wherein the side surfaces facing each other of the third segment and its adjacent second segment of the section have been established by breaking by a bending movement of the rigid polymer foam.
Item 9.- Rigid insulation foam product as in item 8, characterized in that the second facings of the second segment and of the third segment have been separated from each other by a cut.
Item 10.- Rigid insulation foam product as in any of the preceding items 8 - 9, characterized in that the facing side surfaces of the second segment and of the third segment contact each other -preferably over substantially their full surface area - when the folded or rolled rigid foam product is unfolded or unrolled to a flat rigid insulation foam product wherein the second facing of the second segment and of the third segment are lying on a flat surface.
Item 11.- Rigid insulation foam product as in any of the preceding items 8 - 10, characterized in that the rigid insulation foam product comprises a plurality of second segments and third segments, wherein a second segment is adjacent to a third segment.
Item 12.- Rigid insulation foam product as in any of the preceding items, characterized in that the first facing and the second facing have the same composition or have a different composition.
Item 13.- Rigid insulation foam product as in any of the preceding items 1 - 12, characterized in that the first facing and/or the second facing comprise an aluminum foil.
Item 14.- Rigid insulation foam product as in any of the preceding items 1 - 12, characterized in that the first facing and/or the second facing consist of an aluminum foil, preferably a coated aluminum foil.
Item 15.- Rigid insulation foam product as in any of the preceding items, characterized in that one or more than one additional layer(s) is/are laminated at the bottom of the second facing, such as a woven or nonwoven glass fabric; a layer comprising hooks or loops for a hook-and-loop fixation system; or a pressure sensitive adhesive layer, optionally with a release liner.
Item 16.- Rigid insulation foam product as in any of the preceding items, characterized in that the side surfaces of the first segment(s), the second segment(s) and the optional third segment(s) are substantially flat at least to a distance of at most 5 mm, and preferably to a distance of at most 3 mm, from the facing - being the second facing or the first facing - continuing between adjacent segments.
Item 17.- Rigid insulation foam product as in any of the preceding items, characterized in that the combined thickness of the first facing, the rigid polymer foam, and the second facing is more than 20 mm, preferably more than 35 mm, preferably more than 65 mm, and preferably less than 300 mm, more preferably less than 150 mm.
Item 18.- Rigid insulation foam product as in any of the preceding items, characterized in that the rigid polymer foam is selected from rigid isocyanurate foam, rigid polyurethane foam or rigid phenolic foam.
Item 19.- Rigid insulation foam product as in any of the preceding items 1 - 18, characterized in that the angle between the second facings at the bottom of at least one first segment and its adjacent second segment is 90°; preferably wherein the rigid insulation foam product comprises a plurality of first segments wherein the angle between the second facings of the first segment and its adjacent second segment is 90°.
Item 20.- Rigid insulation foam product as in any of the preceding items 1 - 18, characterized in that the angle between the second facings at the bottom of at least one first segment and its adjacent second segment is at least 120°; preferably wherein the rigid insulation foam product comprises a plurality of first segments wherein the angle between the second facings of the first segment and its adjacent second segment is at least 120°.
Item 21.- Rigid insulation foam product as in any of the preceding items and as in item 8, characterized in that the insulation product comprises a first segment, a second segment adjacent to the first segment, and a third segment adjacent to said second segment; wherein the angle between the second facings of the first segment and the second segment is 0°; and wherein the angle between the first facings of the second segment and the third segment is 0°.
Item 22.- Rigid insulation foam product as in any of the preceding items, characterized in that the side walls of the first segment(s), of the second segment(s) and of the optional third segment(s) are established by ultrasonic cutting of the rigid polymer foam through the first facing into the rigid polymer foam.
Item 23.- Rigid insulation foam product as in any of the preceding items, characterized in that it has in unrolled or unfolded condition a length of at least 5 meter.
Item 24.- Rigid insulation foam product as in any of the preceding items, characterized in that the first segment(s), the second segment(s) and the optional third segment(s) comprise a first end face and a second end face; preferably wherein the first end face and the second end face are provided in the length direction of the rigid insulation foam product when unrolled or unfolded;
   wherein the first end faces comprise a first coupling part and the second end faces comprise a corresponding second coupling part.
Item 25.- Rigid insulation foam product as in any of the preceding items, unfolded or unrolled to a flat rigid insulation foam product, wherein the second facing of each of the segments is provided in the same plane.
Item 26.- Method for producing a rigid insulation foam product as in any of the preceding items, wherein the method comprises the steps of
   a) providing a board comprising rigid polymer foam between a continuous first facing and a continuous second facing, wherein the rigid polymer foam has been foamed onto the first facing as well as on the second facing ;
   b) providing a knife;
   c) cutting with the knife through the first facing, and into the rigid polymer foam up to a distance of at most 5 mm - and preferably at most 3 mm - above the second facing; and breaking by bending the remaining not cut distance of the rigid polymer foam; wherein in step c) the first segment and the second segment are created.
Item 27.- Method as in item 26, characterized in that step c) is repeated such that a plurality of first segments and each time an adjacent second segment is created.
Item 28.- Method as in any of the preceding items 26 - 27, characterized in that the method comprises a step d), wherein step d) comprises providing a knife and cutting with the knife through the second facing, and into the rigid polymer foam up to a distance of at most 5 mm - and preferably at most 3 mm - above the first facing, and breaking by bending the remaining not cut distance of the polymer foam, wherein in step d) a third segment and an adjacent second segment are created..
Item 29.- Method as in item 28, characterized in that step d) is repeated such that a plurality of third segments and with each time an adjacent second segment is created.
Item 30.- Method as in any of the preceding items 26 - 29, characterized in that the method comprises the step of rolling or folding the rigid insulation foam product.
Item 31.- Method as in any of the preceding items 26 - 30, characterized in that the knife provided in step b) - and preferably in the optional step d) - is an ultrasonic knife; and that said cutting is ultrasonic cutting.
Item 32.- Method as in item 31, characterized in that said ultrasonic cutting is performed at a frequency of at least 20 kHz; and/or at a speed higher than 200 mm/s, and preferably at a speed lower than 800 mm/s.
Item 33.- Method as in any of the preceding 31 - 32, characterized in that the ultrasonic knife is less than 2.5 mm thick, and preferably less than 2 mm thick, more preferably less than 1.6 mm thick.
Item 34.- Method as in any of the preceding items 31 - 33, characterized in that in the cutting operation the ultrasonic cutting knife cuts while making an angle between 20° and 70° with the direction perpendicular to the first facing at the location the cutting is performed.
Item 35.- Method as in any of the preceding items 31 - 34, characterized in that in the cutting operation the ultrasonic cutting knife cuts while being in a plane perpendicular to the first facing at the location the cutting is performed.
Item 36.- Method as in any of the preceding items 26 - 30, characterized in that the knife is a punching knife; and wherein said cutting with said punching knife is a punching operation.
Item 37.- Method as in item 36, characterized in that the punching knife is less than 2 mm thick.

The present invention is in no way limited to the embodiments described as examples and represented in the figures, on the contrary the invention can be realized in various forms and dimensions, without leaving the scope of the invention.

## Claims

1. Rigid insulation foam product in folded or in rolled form, wherein the rigid insulation foam product comprises a plurality of parallel segments of rigid polymer foam;
wherein each of the segments comprises when the folded or rolled rigid foam product is unfolded or unrolled to a flat rigid insulation foam product, a top surface, a bottom surface and two side surfaces; wherein the top surface is opposite to the bottom surface;
wherein each of the segments comprises at its top surface a first facing;
wherein each of the segments comprises at its bottom surface a second facing;
wherein the rigid polymer foam has been foamed onto the first facing and onto the second facing;
wherein the plurality of parallel segments comprises a first segment and a second segment, wherein the first segment is adjacent to the second segment; wherein the second facing of the first segment continues into the second facing of the second segment;
wherein the side surfaces of the first segment and of the second segment facing each other in unrolled or unfolded condition have been established by cutting into the rigid polymer foam except for a section of at most 5 mm - and preferably at most 3 mm - above the second facing; and wherein the side surfaces of the first segment and of the second segment facing each other in said section have been established by breaking by a bending movement of the rigid polymer foam;
preferably wherein the rigid polymer foam is selected from rigid isocyanurate foam, rigid polyurethane foam or rigid phenolic foam.

2. Rigid insulation foam product as in claim 1, **characterized in that** the facing side surfaces of the first segment and of the second segment contact each other - and preferably over substantially their full surface area - when the folded or rolled rigid foam product is unfolded or unrolled to a flat rigid insulation foam product wherein the second facing of the first segment and of the second segment are lying flat on a flat surface.

3. Rigid insulation foam product as in any of the preceding claims, **characterized in that** the plurality of parallel segments comprises or consists of a series of first segments and second segments, wherein a second segment is adjacent to a first segment.

4. Rigid insulation foam product as in any of the preceding claims, **characterized in that** the plurality of segments comprise a third segment;
wherein the third segment is adjacent to the second segment;
wherein the first facing of the second segment continues into the first facing of the third segment;
wherein, the side surfaces of the third segment and of the adjacent second segment facing each other in unfolded or unrolled condition have been established by cutting into rigid insulation foam except for a section of at most 5 mm - and preferably at most 3 mm - above the first facing; and wherein the side surfaces facing each other of the third segment and its adjacent second segment of the section have been established by breaking by a bending movement of the rigid polymer foam.

5. Rigid insulation foam product as in claim 4, **characterized in that** the facing side surfaces of the second segment and of the third segment contact each other -preferably over substantially their full surface area - when the folded or rolled rigid foam product is unfolded or unrolled to a flat rigid insulation foam product wherein the second facing of the second segment and of the third segment are lying on a flat surface.

6. Rigid insulation foam product as in any of the preceding claims, **characterized in that** the side surfaces of the first segment(s), the second segment(s) and the optional third segment(s) are substantially flat at least to a distance of at most 5 mm, and preferably to a distance of at most 3 mm, from the facing - being the second facing or the first facing - continuing between adjacent segments.

7. Rigid insulation foam product as in any of the preceding claims 1 - 6, **characterized in that** the angle between the second facings at the bottom of at least one first segment and its adjacent second segment is 90°; preferably wherein the rigid insulation foam product comprises a plurality of first segments wherein the angle between the second facings of the first segment and its adjacent second segment is 90°.

8. Rigid insulation foam product as in any of the preceding claims 1 - 6, **characterized in that** the angle between the second facings at the bottom of at least one first segment and its adjacent second segment is at least 120°; preferably wherein the rigid insulation foam product comprises a plurality of first segments wherein the angle between the second facings of the first segment and its adjacent second segment is at least 120°.

9. Rigid insulation foam product as in any of the preceding claims and as in claim 4, **characterized in that** the insulation product comprises a first segment, a second segment adjacent to the first segment, and a third segment adjacent to said second segment; wherein the angle between the second facings of the first segment and the second segment is 0°; and wherein the angle between the first facings of the second segment and the third segment is 0°.

10. Rigid insulation foam product as in any of the preceding claims, **characterized in that** the side walls of the first segment(s), of the second segment(s) and of the optional third segment(s) are established by ultrasonic cutting of the rigid polymer foam through the first facing into the rigid polymer foam.

11. Rigid insulation foam product as in any of the preceding claims, **characterized in that** the first segment(s), the second segment(s) and the optional third segment(s) comprise a first end face and a second end face; preferably wherein the first end face and the second end face are provided in the length direction of the rigid insulation foam product when unrolled or unfolded;
wherein the first end faces comprise a first coupling part and the second end faces comprise a corresponding second coupling part.

12. Rigid insulation foam product as in any of the preceding claims, unfolded or unrolled to a flat rigid insulation foam product, wherein the second facing of each of the segments is provided in the same plane.

13. Method for producing a rigid insulation foam product as in any of the preceding claims, wherein the method comprises the steps of
a) providing a board comprising rigid polymer foam between a continuous first facing and a continuous second facing, wherein the rigid polymer foam has been foamed onto the first facing as well as on the second facing ;
b) providing a knife;
c) cutting with the knife through the first facing, and into the rigid polymer foam up to a distance of at most 5 mm - and preferably at most 3 mm - above the second facing; and breaking by bending the remaining not cut distance of the rigid polymer foam;
wherein in step c) the first segment and the second segment are created;
preferably wherein step c) is repeated such that a plurality of first segments and each time an adjacent second segment is created;
preferably wherein the method comprises the step of rolling and folding the rigid insulation foam product.

14. Method as in claim 13, **characterized in that** the knife provided in step b) is an ultrasonic knife; and that said cutting is ultrasonic cutting; preferably wherein the ultrasonic knife is less than 2.5 mm thick.

15. Method as in claim 13, **characterized in that** the knife is a punching knife; and wherein said cutting with said punching knife is a punching operation; preferably wherein the punching knife is less than 2 mm thick.
